# FASCICULE DE BREVET EUROPEEN

(11) **EP 3 154 907 B1**
(45) Date de publication et mention de la délivrance du brevet: **03.04.2019**
(21) Numéro de dépôt: 15728827.5
(22) Date de dépôt: 09.06.2015
(51) Int. Cl.: C01F 7/02, C01F 7/14, B01J 21/04, B01J 35/10

(54) **ALUMINE MESOPOREUSE AMORPHE A DISTRIBUTION POREUSE OPTIMISEE ET SON PROCEDE DE PREPARATION**
AMORPHES MESOPORÖSES ALUMINIUMOXID MIT OPTIMIERTER PORENVERTEILUNG UND VERFAHREN ZUR HERSTELLUNG DAVON
AMORPHOUS MESOPOROUS ALUMINA WITH OPTIMISED PORE DISTRIBUTION AND METHOD FOR PREPARING SAME

(30) Priorité: 13.06.2014 FR 1455412
(43) Date de publication de la demande: 19.04.2017
(73) Titulaire: IFP Energies nouvelles, 92500 Rueil-Malmaison (FR)
(72) Inventeur: BOUALLEG, Malika, F-69100 Villeurbanne (FR); BOUVRY, Céline, F-92500 Rueil-Malmaison (FR)
(74) Mandataire: IFP Energies nouvelles
(86) Numéro de dépôt international: PCT/EP2015/062825
(87) Numéro de publication internationale: WO 2015/189199

(56) Documents cités:
- WO-A1-2005/028106
- US-A- 4 172 809
- US-A1- 2014 161 716
- US-B1- 6 589 908

## Description

### Domaine technique

La présente invention se rapporte à la préparation d'une alumine mésoporeuse amorphe mise en forme à partir d'un gel d'alumine présentant une faible dispersibilité, ledit gel d'alumine étant obtenu par un procédé comprenant deux étapes de précipitation d'au moins un précurseur d'aluminium, avec l'obtention d'une quantité contrôlée d'alumine par rapport à la quantité totale d'alumine formée à l'issue du procédé de préparation du gel, lors de la première étape de précipitation du gel.

En particulier, la présente invention se rapporte à une alumine mésoporeuse amorphe présentant une distribution poreuse spécifique. L'alumine selon l'invention, du fait de ses propriétés intéressantes notamment en terme de distribution poreuse, peut être utilisée comme support de catalyseurs dans tous procédés de raffinage ainsi que comme adsorbant.

### Art antérieur

La préparation de gel d'alumine par précipitation est bien connue dans l'art antérieur, en une étape ou deux étapes de précipitation.

Le brevet US 6 589 908 décrit par exemple un procédé de préparation d'une alumine caractérisée par une absence de macropores, moins de 5 % du volume poreux total constitué par les pores de diamètre supérieur à 35 nm, un haut volume poreux supérieur à 0,8 ml/g, et une distribution de pores bimodale dans laquelle les deux modes sont séparés par 1 à 20 nm et le mode poreux primaire étant plus grand que le diamètre médian poreux.

A cet effet, le mode décrit met en oeuvre deux étapes de précipitation de précurseurs d'alumine dans des conditions de température, pH et débits bien contrôlés. La première étape opère à une température comprise entre 25 et 60°C, un pH compris entre 3 et 10. La suspension est ensuite chauffée jusqu'à une température comprise entre 50 et 90°C. Des réactifs sont de nouveau ajoutés à la suspension, qui est ensuite lavée, séchée, mise en forme et calcinée pour former un support de catalyseur.

Aucune information n'est donnée sur la dispersibilité du gel d'alumine, ni sur une sélection particulière du taux d'avancement de la première étape, qui varie selon les exemples donnés entre 14 et 34 %.

Par ailleurs, le brevet US 7 790 652 décrit la préparation par précipitation d'un support alumine présentant une distribution poreuse bien spécifique, pouvant être utilisé comme support de catalyseur dans un procédé d'hydroconversion de charges hydrocarbonées lourdes.

Le support alumine est préparé selon une méthode comprenant une première étape de formation d'une dispersion d'alumine par le mélange, de manière contrôlée, d'une première solution aqueuse alcaline et d'une première solution aqueuse acide, au moins une desdites solutions acide et basiques, ou les deux comprenant un composé aluminique. Les solutions acide et basique sont mélangées dans des proportions telles que le pH de la dispersion résultante est compris entre 8 et 11. Les solutions acide et basique sont également mélangées dans des quantités permettant d'obtenir une dispersion contenant la quantité désirée d'alumine, en particulier, la première étape permet l'obtention de 25 à 35% poids d'alumine par rapport à la quantité totale d'alumine formée à l'issue des deux étapes de précipitation. La première étape opère à une température comprise entre 20 et 40°C. Quand la quantité d'alumine désirée est formée, la température de la suspension est augmentée à une température comprise entre 45 et 70°C, puis la suspension chauffée est ensuite soumise à une deuxième étape de précipitation par mise en contact de ladite suspension avec une seconde solution aqueuse alcaline et une seconde solution aqueuse acide, au moins l'une des deux solutions ou les deux comprenant un composé aluminique. De même, le pH est réglé entre 8 et 10,5 par les proportions des solutions acide et basique ajoutées et la quantité restante d'alumine a former dans la deuxième étape est apportée par les quantités des deuxièmes solutions acide et basique ajoutées. La deuxième étape opère à une température comprise entre 20 et 40°C. Le gel d'alumine ainsi formé comprend au moins 95% de boehmite. La dispersibilité du gel d'alumine ainsi obtenu n'est pas mentionnée. Le gel d'alumine est ensuite filtré, lavé et éventuellement séché selon les méthodes connues de l'homme du métier, pour produire une poudre d'alumine qui est ensuite mise en forme selon les méthodes connues de l'homme du métier, puis calcinée pour produire le support alumine final.

La première étape de précipitation du procédé de préparation du brevet US 7 790 652 est limitée à une production d'alumine comprise entre 25 et 35% poids, une production d'alumine plus élevée à l'issue de la première étape ne permettant pas une filtration optimale du gel obtenu. Le matériau obtenu est un support à base d'alumine ayant une haute surface spécifique, un volume poreux total supérieur ou égal à 0,75 ml/g et un diamètre médian poreux compris entre 10 et 14 nm. Moins de 5 % du volume des pores est constitué par des pores de diamètre médian mésoporeux supérieur à 21 nm.

De manière surprenante, la demanderesse a découvert un nouveau procédé de préparation d'une alumine mise en forme à partir d'un gel d'alumine spécifique présentant un taux de dispersibilité faible, et préparé selon un procédé comprenant deux étapes de précipitation d'au moins un précurseur d'aluminium dans laquelle seule une quantité contrôlée et limitée, entre 5 et 13 % poids d'alumine par rapport à la quantité totale d'alumine formée à l'issue dudit procédé de préparation du gel, est formée à la première étape de précipitation. La demanderesse a découvert que ledit gel pouvait être mis en forme et calciné pour obtenir une alumine mésoporeuse amorphe présentant à la fois un haut volume poreux, une haute surface spécifique, une distribution mésoporeuse monomodale spécifique, ainsi qu'un diamètre médian mésoporeux très élevé.

Un objectif de la présente invention est de fournir une alumine mésoporeuse amorphe présentant une distribution mésoporeuse monomodale spécifique, ainsi qu'un diamètre de pores moyen élevé.

Un autre objectif de la présente invention est de fournir un procédé de préparation de ladite alumine par mise en forme d'un gel d'alumine présentant une dispersibilité faible, généralement inférieure à 15%, et en particulier inférieure à 10%, ainsi qu'une taille de cristallite entre 1 et 35 nm.

### Objets de l'invention

La présente invention a pour objet une alumine mésoporeuse amorphe présentant un diamètre des pores élevé ainsi qu'une distribution poreuse particulière, monomodale dans le domaine de la mésoporosité.

Un avantage de l'invention est de fournir une alumine dont la porosité est caractérisée par une contribution de la porosité entre 10 et 30 nm très importante, avec notamment un diamètre médian mésoporeux supérieur ou égal à 16 nm, de préférence supérieur ou égal à 18 nm, de manière très préférée supérieur ou égal à 20 nm, de manière encore plus préférée compris entre 21 et 23 nm, bornes incluses.

Cette porosité représente un avantage important pour la diffusion des molécules à traiter lors des réactions catalytiques utilisant ces matériaux.

La présente invention a également pour objet un procédé de préparation de ladite alumine, ledit procédé comprenant au moins les étapes suivantes :
a) une première étape de précipitation, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique et l'acide nitrique, dans lequel au moins un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la première étape compris entre 5 et 13 %, le taux d'avancement étant défini comme étant la proportion d'alumine formée en équivalent Al₂O₃ lors de ladite première étape de précipitation par rapport à la quantité totale d'alumine formée à l'issue de l'étape c) du procédé de préparation, ladite étape opérant à une température comprise entre 20 et 90°C et pendant une durée comprise entre 2 minutes et 30 minutes ;
b) une étape de chauffage de la suspension à une température comprise entre 40 et 90°C pendant une durée comprise entre 7 minutes et 45 minutes,
c) une deuxième étape de précipitation de la suspension obtenue à l'issue de l'étape de chauffage b) par ajout dans la suspension d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique et l'acide nitrique, dans lequel au moins un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la deuxième étape compris entre 87 et 95 %, le taux d'avancement étant défini comme étant la proportion d'alumine formée en équivalent Al₂O₃ lors de ladite deuxième étape de précipitation par rapport à la quantité totale d'alumine formée à l'issue de l'étape c) du procédé de préparation, ladite étape opérant à une température comprise entre 40 et 90 °C et pendant une durée comprise entre 2 minutes et 50 minutes ;
d) une étape de filtration de la suspension obtenue à l'issue de l'étape c) de deuxième précipitation pour obtenir un gel d'alumine ;
e) une étape de séchage dudit gel d'alumine obtenu à l'étape d) pour obtenir une poudre, ladite étape de séchage opérant de préférence par séchage une température comprise entre 20 et 200°C et pendant une durée comprise entre 8h et 15 h ou par atomisation ou par toute autre méthode connue de l'homme du métier,
f) une étape de mise en forme de la poudre obtenue à l'issue de l'étape e) pour obtenir le matériau cru,
g) une étape de traitement thermique du matériau cru obtenu à l'issue de l'étape e) à une température comprise entre 500 et 1000°C, en présence ou non d'un flux d'air contenant jusqu'à 60% en volume d'eau.

Un avantage de l'invention est de fournir un nouveau procédé de préparation d'une alumine mésoporeuse amorphe à partir d'un gel d'alumine spécifique préparé selon un procédé comprenant deux étapes de précipitation d'au moins un précurseur d'aluminium dans laquelle entre 5 et 13 % poids d'alumine seulement sont formés à la première étape de précipitation, par rapport à la quantité totale d'alumine formée à l'issue dudit procédé de préparation du gel, ledit gel d'alumine spécifique présentant une dispersibilité avantageusement inférieure à 15%, et de préférence comprise entre 6 et 13%, et de manière très préférée comprise entre 6 et 10%. Le procédé de préparation de l'alumine selon l'invention permet l'obtention d'une alumine mésoporeuse amorphe présentant une distribution poreuse spécifique, notamment un volume poreux élevé et un diamètre médian mésoporeux élevé, notamment supérieur ou égal à 16 nm.

### Terminologie

Dans toute la suite du texte, la dispersibilité est définie comme le poids de solide ou gel d'alumine peptisée que l'on ne peut pas disperser par centrifugation dans un tube en polypropylene à 3600G pendant 3 min.

L'alumine de la présente invention présente en outre une distribution poreuse spécifique, où les volumes macroporeux et mésoporeux sont mesurés par intrusion de mercure et le volume microporeux est mesuré par adsorption d'azote.

Par « macropores », on entend des pores dont l'ouverture est supérieure à 50 nm.

Par « mésopores », on entend des pores dont l'ouverture est comprise entre 2 nm et 50 nm, bornes incluses.

Par « micropores », on entend des pores dont l'ouverture est inférieure à 2 nm.

Dans l'exposé qui suit de l'invention, la distribution poreuse mesurée par porosimétrie au mercure est déterminée par intrusion au porosimètre à mercure selon la norme ASTM D4284-83 à une pression maximale de 4000 bar, utilisant une tension de surface de 484 dyne/cm et un angle de contact de 140°. L'angle de mouillage a été pris égal à 140° en suivant les recommandations de l'ouvrage "Techniques de l'ingénieur, traité analyse et caractérisation, P 1050-5, écrits par Jean Charpin et Bernard Rasneur".

On définit également le diamètre médian des mésopores (Dₚ en nm) comme étant un diamètre tel que tous les pores de taille inférieure à ce diamètre constituent 50% du volume mésoporeux total, mesuré par porosimétrie au mercure.

La distribution poreuse mesurée par adsorption d'azote a été déterminée par le modèle Barrett-Joyner-Halenda (BJH). L'isotherme d'adsorption - désorption d'azote selon le modèle BJH est décrit dans le périodique "The Journal of American Society" , 73, 373, (1951) écrit par E.P.Barrett, L.G.Joyner et P.P.Halenda.

Dans l'exposé qui suit de l'invention, on entend par surface spécifique, la surface spécifique B.E.T. déterminée par adsorption d'azote conformément à la norme ASTM D 3663-78 établie à partir de la méthode BRUNAUER-EMMETT-TELLER décrite dans le périodique « The Journal of American Society", 60, 309, (1938).

Le volume des macropores et des mésopores est mesuré par porosimétrie par intrusion de mercure selon la norme ASTM D4284-83 à une pression maximale de 4000 bar, utilisant une tension de surface de 484 dyne/cm et un angle de contact de 140°.

On fixe à 0,2 MPa la valeur à partir de laquelle le mercure remplit tous les vides intergranulaires, et on considère qu'au-delà le mercure pénètre dans les pores de l'alumine.

Afin d'obtenir une meilleure précision, la valeur du volume poreux total en ml/g donnée dans le texte qui suit correspond ainsi à la valeur du volume total mesuré par intrusion au porosimètre à mercure en ml/g mesurée sur l'échantillon diminuée de la valeur du volume mercure en ml/g mesurée sur le même échantillon pour une pression correspondant à 30 psi (environ 0,2 MPa).

Le volume macroporeux de l'alumine est alors défini comme étant le volume cumulé de mercure introduit à une pression comprise entre 0,2 MPa et 30 MPa, correspondant au volume contenu dans les pores de diamètre apparent supérieur à 50 nm.

Le volume mésoporeux de l'alumine est alors défini comme étant le volume cumulé de mercure introduit à une pression comprise entre 30 MPa et 400 MPa, correspondant au volume contenu dans les pores de diamètre apparent compris entre 2 et 50 nm.

Le volume des micropores est mesuré par porosimétrie à l'azote. L'analyse quantitative de la microporosité est effectuée à partir de la méthode "t" (méthode de Lippens-De Boer, 1965) qui correspond à une transformée de l'isotherme d'adsorption de départ comme décrit dans l'ouvrage « Adsorption by powders and porous solids. Principles, methodology and applications » écrit par F. Rouquérol, J. Rouquérol et K. Sing, Academic Press, 1999.

### Description de l'invention

### Résumé de l'invention

L'invention concerne un procédé de préparation d'une alumine mésoporeuse amorphe, ledit procédé comprenant au moins les étapes suivantes :
a) une première étape de précipitation, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique et l'acide nitrique, dans lequel au moins un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la première étape compris entre 5 et 13%, le taux d'avancement étant défini comme étant la proportion d'alumine formée en équivalent Al₂O₃ lors de ladite première étape de précipitation par rapport à la quantité totale d'alumine formée à l'issue de l'étape c), ladite étape opérant à une température comprise entre 20 et 90 degrés et pendant une durée comprise entre 2 minutes et 30 minutes;
b) une étape de chauffage de la suspension à une température comprise entre 40 et 90°C pendant une durée comprise entre 7 minutes et 45 minutes,
c) une deuxième étape de précipitation de la suspension obtenue à l'issue de l'étape de chauffage b) par ajout dans la suspension d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique et l'acide nitrique, dans lequel au moins un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la deuxième étape compris entre 87 et 95 %, le taux d'avancement étant défini comme étant la proportion d'alumine formée en équivalent Al₂O₃ lors de ladite deuxième étape de précipitation par rapport à la quantité totale d'alumine formée à l'issue de l'étape c) du procédé de préparation, ladite étape opérant à une température comprise entre 40 et 90 °C et pendant une durée comprise entre 2 minutes et 50 minutes ;
d) une étape de filtration de la suspension obtenue à l'issue de l'étape c) de deuxième précipitation pour obtenir un gel d'alumine ;
e) une étape de séchage dudit gel d'alumine obtenu à l'étape d) pour obtenir une poudre,
f) une étape de mise en forme de la poudre obtenue à l'issue de l'étape e) pour obtenir un matériau cru,
g) une étape de traitement thermique du matériau cru obtenu à l'issue de l'étape f) à une température comprise entre 500 et 1000°C, en présence ou non d'un flux d'air contenant jusqu'à 60% en volume d'eau.

De préférence, le taux d'avancement de la première étape de précipitation a) est compris entre 6 et 12%.

De manière très préférée, le taux d'avancement de la première étape de précipitation a) est compris entre 7 et 11%.

De préférence, le précurseur basique est l'aluminate de sodium.

De préférence, le précurseur acide est le sulfate d'aluminium.

De préférence, dans la première étape de précipitation, le milieu réactionnel aqueux est de l'eau et ladite étape opère sous agitation, en l'absence d'additif organique.

L'invention concerne également une alumine mésoporeuse amorphe présentant un diamètre médian mésoporeux en volume déterminé par intrusion au porosimètre à mercure supérieur ou égal à 16 nm, un volume mésoporeux tel que mesuré par intrusion au porosimètre à mercure, compris entre 0,70 et 0,90 ml/g, et un volume poreux total mesuré par porosimétrie au mercure supérieur à 0,75 ml/g, et dans laquelle le volume des macropores est inférieur à 10 % du volume poreux total.

De préférence, le volume des macropores est inférieur à 5 % du volume poreux total.

De préférence, l'alumine mésoporeuse amorphe ne présente pas de micropores.

De préférence, l'alumine mésoporeuse amorphe présente un diamètre médian mésoporeux en volume déterminé par intrusion au porosimètre à mercure supérieur à 18 nm, de manière très préférée supérieur à 20 nm.

### Description détaillée de l'invention

L'alumine selon la présente invention est une alumine mésoporeuse à mésoporosité contrôlée présentant une bonne stabilité thermique et chimique, ayant une distribution en taille des mésopores centrée, uniforme, monomodale, et contrôlée.

L'alumine présente avantageusement une surface spécifique et un volume poreux et en particulier mésoporeux calibrés.

De préférence, l'alumine mésoporeuse est dépourvue de micropores.

De préférence, l'alumine présente avantageusement une surface spécifique supérieure à 75 m²/g.

De manière très préférée, la surface spécifique de l'alumine mésoporeuse est supérieure à 100 m²/g.

De manière encore plus préférée, la surface spécifique de l'alumine mésoporeuse est supérieure à 125 m²/g.

Le volume mésoporeux, défini comme étant le volume compris dans les pores ayant un diamètre apparent compris entre 2 et 50 nm, bornes incluses, est mesuré par porosimétrie au mercure. Selon l'invention, le volume mésoporeux de l'alumine est compris entre 0,70 ml/g et 0,90 ml/g.

De préférence, l'alumine selon l'invention est une alumine non mésostructurée.

Un autre objet de l'invention concerne le procédé de préparation de ladite alumine.

Conformément à l'invention, ledit procédé de préparation comprend une première étape a) de précipitation, une étape b) de chauffage, une étape c) de deuxième précipitation, une étape d) de filtration, une étape e) de séchage, une étape f) de mise en forme, une étape g) de traitement thermique.

Le taux d'avancement pour chacune des étapes de précipitation est défini comme étant la proportion d'alumine formée en équivalent Al₂O₃ lors de ladite première ou deuxième de précipitation par rapport à la quantité totale d'alumine formée en équivalent Al₂0₃ à l'issue des deux étapes de précipitation et plus généralement à l'issue des étapes de préparation du gel d'alumine et notamment à l'issue de l'étape c) du procédé de préparation selon l'invention.

### étape a) : première précipitation

Cette étape consiste en la mise en contact, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la première étape compris entre 5 et 13%, le taux d'avancement étant défini comme étant la proportion d'alumine formée en équivalent Al₂O₃ lors de ladite première étape de précipitation par rapport à la quantité totale d'alumine formée à l'issue des étapes de précipitation et plus généralement à l'issue des étapes de préparation du gel d'alumine, notamment à l'issue de l'étape c) du procédé de préparation, ladite étape opérant à une température comprise entre 20 et 90 °C, et pendant une durée comprise entre 2 minutes et 30 minutes.

Le mélange dans le milieu réactionnel aqueux d'au moins un précurseur basique et d'au moins un précurseur acide nécessite soit, qu'au moins un des précurseurs acide ou basique comprenne de l'aluminium. Il est également possible qu'au moins deux des précurseurs basique et acide comprennent de l'aluminium.

Les précurseurs basiques comprenant de l'aluminium sont l'aluminate de sodium et l'aluminate de potassium. Le précurseur basique préféré est l'aluminate de sodium.

Les précurseurs acides comprenant de l'aluminium sont le sulfate d'aluminium, le chlorure d'aluminium et le nitrate d'aluminium. Le précurseur acide préféré est le sulfate d'aluminium.

De préférence, le milieu réactionnel aqueux est de l'eau.

De préférence, ladite étape a) opère sous agitation.

De préférence, ladite étape a) est réalisée en l'absence d'additif organique.

Les précurseurs acide et basique, qu'ils contiennent de l'aluminium ou pas, sont mélangés, de préférence en solution, dans le milieu réactionnel aqueux, dans des proportions telles que le pH de la suspension résultante est compris entre 8,5 et 10,5.

Conformément à l'invention, les précurseurs acides d'alumine et les précurseurs basiques d'alumine peuvent être utilisés seuls ou en mélange dans l'étape de précipitation.

Conformément à l'invention, le débit relatif des précurseurs acide et basique qu'ils contiennent de l'aluminium ou pas, est choisi de manière à obtenir un pH du milieu réactionnel compris entre 8,5 et 10,5.

Dans le cas préféré où les précurseurs basique et acide sont respectivement l'aluminate de sodium et le sulfate d'aluminium, le ratio massique dudit précurseur basique sur ledit précurseur acide est avantageusement compris entre 1,60 et 2,05.

Pour les autres précurseurs basique et acide, qu'ils contiennent de l'aluminium ou pas, les ratio massiques base/acide sont établis par une courbe de neutralisation de la base par l'acide. Une telle courbe est obtenue aisément par l'homme du métier.

De préférence, ladite étape a) de précipitation est réalisée à un pH compris entre 8,5 et 10,0 et de manière très préférée entre 8,7 et 9,9.

De préférence, la première étape a) de précipitation est réalisée à une température compris entre 20 et 90°C, de manière préférée entre 20 et 70 °C et de manière plus préférée entre 30 et 50°C.

De préférence, la première étape a) de précipitation est réalisée à un pH compris entre 8 et 10,5, de préférence entre 8 et 10,5, de manière préférée entre 8,5 et 10 et de manière très préférée entre 8,7 et 9,9.

De préférence, la première étape a) de précipitation est réalisée pendant une durée comprise entre 5 et 20 minutes, et de manière préférée de 5 à 15 minutes.

Selon l'invention, le taux d'avancement de ladite première étape de précipitation a) est compris entre 5 et 13%, de préférence entre 6 et 12 % et de préférence entre 7 et 11%. Le taux d'avancement est défini comme étant la proportion d'alumine en équivalent Al₂O₃ formée lors de ladite première étape de précipitation par rapport à la quantité totale d'alumine formée à l'issue de l'étape c) du procédé de préparation.

Les précurseurs acide et basique contenant de l'aluminium sont donc également introduits dans des quantités permettant d'obtenir une suspension contenant la quantité désirée d'alumine, en fonction de la concentration finale en alumine à atteindre. En particulier, ladite étape a) permet l'obtention de 5 à 13 % poids d'alumine par rapport à la quantité totale d'alumine formée à l'issue de l'étape c) du procédé de préparation.

### Étape b) : chauffage

Conformément à l'invention, ledit procédé de préparation comprend une étape b) de chauffage de la suspension obtenue à l'issue de la première étape a) de précipitation.

Selon l'invention, avant que la deuxième étape de précipitation ne soit mise en oeuvre, une étape de chauffage de la suspension obtenue à l'issue de l'étape a) de précipitation est mise en oeuvre entre les deux étapes de précipitation.

Ladite étape de chauffage de la suspension obtenue à l'issue de l'étape a), mise en oeuvre entre ladite première étape de précipitation a) et la deuxième étape de précipitation c) opère à une température comprise entre 40 et 90°C, de préférence entre 40 et 80°C, de manière préférée entre 40 et 70°C et de manière très préférée entre 40 et 65°C.

Ladite étape de chauffage est mise en oeuvre pendant une durée comprise entre 7 et 45 minutes et de préférence entre 7 et 35 minutes.

Ladite étape de chauffage est avantageusement mise en oeuvre selon toutes les méthodes de chauffage connues de l'homme du métier.

### Étape c) : deuxième précipitation

Selon l'invention, ledit procédé de préparation comprend une deuxième étape de précipitation de la suspension chauffée obtenue à l'issue de l'étape b) de chauffage, ladite deuxième étape opérant par ajout dans ladite suspension d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la deuxième étape compris entre 87 et 95%, le taux d'avancement étant défini comme étant la proportion d'alumine formée, en équivalent Al₂O₃, lors de ladite deuxième étape de précipitation par rapport à la quantité totale d'alumine formée à l'issue de l'étape c) du procédé de préparation, ladite étape opérant à une température comprise entre 40 et 90 °C, et pendant une durée comprise entre 2 minutes et 50 minutes.

Le ou les précurseur(s) basique(s) et acide(s) sont ajoutés dans ladite deuxième étape de co-précipitation en solution aqueuse.

De même que dans la première étape de précipitation a), l'ajout dans la suspension chauffée, d'au moins un précurseur basique et d'au moins un précurseur acide nécessite qu'au moins un des précurseurs basique ou acide comprenne de l'aluminium. Il est également possible qu'au moins deux des précurseurs basiques et acides comprennent de l'aluminium.

Les précurseurs basiques comprenant de l'aluminium sont l'aluminate de sodium et l'aluminate de potassium. Le précurseur basique préféré est l'aluminate de sodium.

Les précurseurs acides comprenant de l'aluminium sont le sulfate d'aluminium, le chlorure d'aluminium et le nitrate d'aluminium. Le précurseur acide préféré est le sulfate d'aluminium.

De préférence, ladite deuxième étape de précipitation opère sous agitation.

De préférence, ladite deuxième étape est réalisée en l'absence d'additif organique.

Les précurseurs acides et basiques, qu'ils contiennent de l'aluminium ou pas, sont mélangés, de préférence en solution, dans la suspension, dans des proportions telles que le pH de la suspension résultante est compris entre 8,5 et 10,5.

De même que dans l'étape a) de précipitation, le débit relatif des précurseurs acides et basiques, qu'ils contiennent de l'aluminium ou pas, est choisi de manière à obtenir un pH du milieu réactionnel compris entre 8,5 et 10,5, de préférence compris entre 8,5 et 10, de manière encore plus préférée entre 8,7 et 9,9.

Dans le cas préféré où les précurseurs basique et acide sont respectivement l'aluminate de sodium et le sulfate d'aluminium, le ratio massique dudit précurseur basique sur ledit précurseur acide est avantageusement compris entre 1,60 et 2,05.

Pour les autres précurseurs basique et acide, qu'ils contiennent de l'aluminium ou pas, les ratio massique base/acide sont établis par une courbe de neutralisation de la base par l'acide. Une telle courbe est obtenue aisément par l'homme du métier.

De préférence, ladite deuxième étape de précipitation est réalisée à un pH compris entre 8,5 et 10,0 et de manière préférée entre 8,7 et 9,9.

Les précurseurs d'aluminium sont également mélangés dans des quantités permettant d'obtenir une suspension contenant la quantité désirée d'alumine, en fonction de la concentration finale en alumine à atteindre. En particulier, ladite deuxième étape de précipitation permet l'obtention de 87 à 95% poids d'alumine par rapport à la quantité totale d'alumine formée à l'issue des deux étapes de précipitation.

De même que dans l'étape a) de précipitation, c'est le débit du ou des précurseurs acide et basique contenant de l'aluminium qui est réglé de manière à obtenir un taux d'avancement de la deuxième étape compris entre 87 et 95%, de préférence entre 88 et 94 %, de manière très préférée entre 89 et 93 %, le taux d'avancement étant défini comme étant la proportion d'alumine formée en équivalent Al₂O₃ lors de ladite deuxième étape de précipitation par rapport à la quantité totale d'alumine formée à l'issue de l'étape c) du procédé de préparation.

Ainsi, en fonction de la concentration en alumine visée à l'issue des étapes de précipitation, de préférence comprise entre 20 et 100 g/L, les quantités d'aluminium devant être apportées par les précurseurs acide et/ou basique sont calculées et le débit des précurseurs est réglé en fonction de la concentration desdits précurseurs en aluminium ajoutés, de la quantité d'eau ajoutée dans le milieu réactionnel et du taux d'avancement requis pour chacune des étapes de précipitation.

De même que dans l'étape a) de précipitation, les débits du ou des précurseurs acide et/ou basique contenant de l'aluminium dépendent de la dimension du réacteur utilisé et ainsi de la quantité d'eau ajoutée dans le milieu réactionnel.

A titre d'exemple, si on travaille dans un réacteur de 3 l et que l'on vise 1 l de suspension d'alumine de concentration finale en Al₂O₃ de 50 g/l, avec un taux d'avancement ciblé de 10% pour la première étape de précipitation, 10% de l'alumine totale doit être apportée lors de l'étape a) de précipitation. Les précurseurs d'alumines sont l'aluminate de sodium à une concentration de 155 g/l en Al₂O₃ et le sulfate d'aluminium à une concentration de 102 g/l en Al₂O₃. Le pH de précipitation de la première étape est fixé à 9,5 et la deuxième à 9. La quantité d'eau ajoutée dans le réacteur est de 620 ml.

Pour la première étape a) de précipitation opérant à 30°C et pendant 8 minutes, le débit de sulfate d'aluminium doit être de 2,1 ml/min et le débit d'aluminate de sodium est de 2,6 ml/min. Le ratio massique d'aluminate de sodium sur sulfate d'aluminium est donc de 1,91.

Pour la deuxième étape de précipitation, opérant à 70°C, pendant 30 minutes, le débit de sulfate d'aluminium doit être de 5,2 ml/min et le débit d'aluminate de sodium est de 6,3 ml/min. Le ratio massique d'aluminate de sodium sur sulfate d'aluminium est donc de 1,84.

De préférence, la deuxième étape de précipitation est réalisée à une température comprise entre 40 et 80 °C, de manière préférée entre 45 et 70°C et de manière très préférée entre 50 et 70°C.

De préférence, la deuxième étape de précipitation est réalisée pendant une durée comprise entre 5 et 45 minutes, et de manière préférée de 7 à 40 minutes.

La deuxième étape de précipitation permet généralement l'obtention d'une suspension d'alumine ayant une concentration en Al₂O₃ comprise entre 20 et 100 g/l, de préférence entre 20 et 80g/l, de manière préférée entre 20 et 50g/l.

### Étape d) : filtration

Le procédé de préparation d'alumine selon l'invention comprend également une étape de filtration de la suspension obtenue à l'issue de l'étape c) de deuxième précipitation. Ladite étape de filtration est réalisée selon les méthodes connues de l'homme du métier.

La filtrabilité de la suspension obtenue à l'issue des deux étapes de précipitation est améliorée par la faible dispersibilité du gel d'alumine obtenu, ce qui permet d'améliorer la productivité du procédé selon l'invention ainsi que de permettre une extrapolation du procédé au niveau industriel.

Ladite étape de filtration est avantageusement suivie d'au moins une étape de lavage, de préférence à l'eau et de préférence d'une à trois étapes de lavage, avec une quantité d'eau égale à la quantité de précipité filtré.

L'enchaînement des étapes de première précipitation a), de chauffage b) et de deuxième précipitation c) et de l'étape de filtration d), permet l'obtention d'un gel d'alumine spécifique présentant un taux de dispersibilité inférieur à 15%, de préférence compris entre 5 et 15% et de manière préférée compris entre 6 et 14% et de manière très préférée compris entre 7 et 13%, et de manière encore plus préférée compris entre 7 et 10% et une taille de cristallite comprise entre 1 et 35 nm et de préférence comprise entre 2 à 35 nm.

Le gel d'alumine obtenu présente également avantageusement une teneur en soufre mesurée par la méthode de fluorescence X, comprise entre 0.001 et 2% poids et de préférence comprise entre 0,01 et 0.2 % poids et une teneur en sodium, mesurée par ICP-MS ou spectrométrie à plasma à couplage inductif comprise entre 0.001 et 2 % poids, et de préférence comprise entre 0,01 et 0.1 % poids, les pourcentages poids étant exprimés par rapport à la masse totale de gel d'alumine.

En particulier, le gel d'alumine ou la boehmite sous forme de poudre selon l'invention est composé de cristallites dont la taille, obtenue par la formule de Scherrer en diffraction des rayons X selon les directions cristallographiques [020] et [120] sont respectivement comprises entre 2 et 20 nm et entre 2 et 35 nm.

De préférence, le gel d'alumine selon l'invention présente une taille de cristallites selon la direction cristallographique [020] comprise entre 1 à 15 nm et une taille de cristallite selon la direction cristallographique [120] comprise entre 1 à 35 nm.

La diffraction des rayons X sur les gels d'alumine ou boehmites a été effectuée en utilisant la méthode classique des poudres au moyen d'un diffractomètre.

La formule de Scherrer est une formule utilisée en diffraction des rayons X sur des poudres ou échantillons polycristallins qui relie la largeur à mi-hauteur des pics de diffraction à la taille des cristallites. Elle est décrite en détail dans la référence : Appl. Cryst. (1978). 11, 102-113 Scherrer after sixty years: A survey and some new results in the détermination of crystallite size, J. I. Langford and A. J. C. Wilson.

Le taux de dispersibilité faible du gel ainsi préparé permet de faciliter l'étape de mise en forme dudit gel selon toutes les méthodes connues de l'homme du métier et en particulier par malaxage-extrusion, par granulation et par la technique dite de l'oil drop (égouttage) selon la terminologie anglo-saxonne.

### étape e) : séchage

Conformément à l'invention, le gel d'alumine obtenu à l'issue de l'étape c) de deuxième précipitation, suivie d'une étape de filtration d), est séché dans une étape e) de séchage pour obtenir une poudre, ladite étape de séchage étant mise en oeuvre par exemple par séchage à une température comprise entre 20 et 200°C et pendant une durée comprise entre 8 h et 15h, ou par atomisation ou par toute autre technique de séchage connue de l'homme du métier.

Dans le cas où ladite étape e) de séchage est mise en oeuvre par atomisation, le gâteau obtenu à l'issue de l'étape de deuxième précipitation, suivie d'une étape de filtration, est remis en suspension. Ladite suspension est ensuite pulvérisée en fines gouttelettes, dans une enceinte cylindrique verticale au contact d'un courant d'air chaud afin d'évaporer l'eau selon le principe bien connu de l'homme du métier. La poudre obtenue est entrainée par le flux de chaleur jusqu'à un cyclone ou un filtre à manche qui vont séparer l'air de la poudre.

De préférence, dans le cas où ladite étape e) de séchage est mise en oeuvre par atomisation, l'atomisation est réalisée selon le protocole opératoire décrit dans la publication Asep Bayu Dani Nandiyanto, Kikuo Okuyama, Advanced Powder Technology, 22, 1-19, 2011.

### étape f) : mise en forme

Conformément à l'invention, la poudre obtenue à l'issue de l'étape e) de séchage est mise en forme dans une étape f) pour obtenir un matériau cru.

On entend par matériau cru, le matériau mis en forme et n'ayant pas subi d'étapes de traitement thermique.

De préférence, ladite étape f) de mise en forme est réalisée par malaxage extrusion, par granulation, par la technique de l'oildrop (ou égouttage en français), par pastillage.
De manière très préférée, ladite étape f) de mise en forme est réalisée par malaxage-extrusion.

### étape g) : traitement thermique

Conformément à l'invention, le matériau cru obtenu à l'issue de l'étape f) de mise en forme subit ensuite une étape g) de traitement thermique à une température comprise entre 500 et 1000°C, pendant une durée comprise entre 2 et 10 h, en présence ou non d'au flux d'air contenant jusqu'à 60% volume d'eau.

De préférence, ladite étape g) de traitement thermique opère à une température comprise entre 540°C et 900°C.

De préférence, ladite étape g) de traitement thermique opère pendant une durée comprise entre 2h et 10h.

Ladite étape g) de traitement thermique permet la transition de la boehmite vers l'alumine finale.

L'étape de traitement thermique peut être précédée d'un séchage à une température comprise entre 50°C et 120°C, selon toute technique connue de l'homme du métier.

### Caractéristiques de l'alumine mésoporeuse amorphe obtenue

Le procédé de préparation selon l'invention permet l'obtention d'une alumine mésoporeuse amorphe présentant un diamètre médian mésoporeux élevé, déterminé sur la courbe de distribution poreuse en volume par intrusion au porosimètre à mercure, avantageusement supérieur ou égal à 16 nm, de préférence supérieur ou égal à 18 nm, de manière très préférée supérieur ou égal à 20 nm, de manière encore plus préférée compris entre 21 et 23 nm, bornes incluses.

L'alumine mésoporeuse préparée selon le procédé de l'invention est avantageusement dépourvue de micropores. L'absence de micropores est vérifiée par porosimétrie azote.

L'alumine mésoporeuse selon l'invention présente avantageusement un volume mésoporeux, c'est-à-dire contenu dans les pores de diamètre compris entre 2 et 50 nm, bornes incluses, tel que mesuré par intrusion au porosimètre à mercure, compris entre 0,70 et 0,90 ml/g.

Le volume poreux total mesuré par porosimétrie au mercure est avantageusement supérieur à 0,75 ml/g.

L'alumine mésoporeuse selon l'invention comprend une proportion de macropores, définis comme les pores de diamètre compris supérieur à 50 nm, inférieure à 10%, de préférence inférieure à 5% du volume poreux total déterminé par porosimétrie mercure.

L'alumine mésoporeuse selon l'invention présente généralement une surface spécifique supérieure à 100 m²/g.

L'invention est illustrée par les exemples suivants qui ne présentent, en aucun cas, un caractère limitatif.

### Exemples:

### Exemple 1 (invention):

On réalise la synthèse de trois alumines selon l'invention sur un poste classique avec un réacteur en 5 l en 3 étapes.

La concentration des précurseurs est la suivante : sulfate d'aluminium Al₂(SO₄)₃ à 102g/L en Al₂O₃ et aluminate de sodium NaAlOO à 155g/L en Al₂O₃.

L'alumine selon l'invention (A) est fabriquée selon les étapes suivantes :
a)Une première co-précipitation du sulfate d'aluminium Al₂(SO₄)₃ et de l'aluminate de sodium NaAlOO à 30°C et pH=9,1 en 8 min : le taux d'avancement est de 8%. Le taux d'avancement correspond à la proportion d'alumine formée lors de la première étape, soit une concentration finale en alumine à 45g/l.-Si on travaille dans un réacteur de 5 l et que l'on vise 4 l de suspension d'alumine de concentration finale en Al₂O₃ de 45 g/l, avec un taux d'avancement ciblé de 8 % pour la première étape de précipitation, 8 % de l'alumine totale doit être apportée lors de l'étape a) de précipitation. Le pH de précipitation de la première étape est fixé à 9,1 et le pH de précipitation de la deuxième étape à 9,1. La quantité d'eau présente initialement dans le réacteur est 1330 ml .
   Pour la première étape a) de précipitation opérant à 30°C et pendant 8 minutes, le débit de sulfate d'aluminium doit être de 6,1 ml/min, le débit d'aluminate de sodium est de 7,6 ml/min et le débit d'eau de 69,7 mL/min. Le ratio massique d'aluminate de sodium sur sulfate d'aluminium est donc de 1,91.
b) Une montée en température de 30 à 70°C en 20 à 30 min ;
c) Une deuxième co-précipitation du sulfate d'aluminium Al₂(SO₄)₃ et de l'aluminate de sodium NaAlOO à 70°C et pH=9,1 en 30 min, avec un taux d'avancement de 92% ; Pour la deuxième étape de précipitation, opérant à 70°C, pendant 30 minutes, le débit de sulfate d'aluminium doit être de 19 ml/min, le débit d'aluminate de sodium est de 23 ml/min et le débit d'eau de 24,7 mL/min. Le ratio massique d'aluminate de sodium sur sulfate d'aluminium est donc de 1,84.
d) Filtration par déplacement sur un outil type Buchner fritté P4 et lavage 3 fois avec 5L d'eau distillée à 70°C
e) Séchage une nuit à 120°C
f) Mise en forme du matériau cru :
   Le gel d'alumine séché est introduit dans un malaxeur de type Brabender. De l'eau acidifiée avec de l'acide nitrique à un taux d'acide total de 3 %, exprimé en poids par rapport à la masse de gel séché introduit dans le malaxeur, est ajoutée en 10 minutes, pendant un malaxage à 20 tours/min. Le malaxage acide est poursuivi pendant 5 minutes. Une étape de neutralisation est ensuite réalisée par ajout d'une solution ammoniacale dans le malaxeur, à un taux de neutralisation de 200%, exprimé en poids d'ammoniaque par rapport à la quantité d'acide nitrique introduit dans le malaxeur pour l'étape d'acidification. Le malaxage est poursuivi pendant 3 minutes.
   La pâte obtenue est ensuite extrudée à travers une filière de 2 mm trilobée.
g) Traitement thermique : Les extrudés obtenus sont séchés à 100°C pendant une nuit, puis calcinés 2h à 800°C sous flux d'air humide en four tubulaire (VVH=1 l/h/g avec 30%v/v d'eau).

La distribution poreuse de l'alumine obtenue est caractérisée par intrusion au porosimètre à mercure selon la norme ASTM D4284-83 à une pression maximale de 4000 bar, utilisant une tension de surface de 484 dyne/cm et un angle de contact de 140°.

L'absence de microporosité est vérifiée par porosimétrie azote.

Une deuxième alumine selon l'invention (B) et une troisième alumine selon l'invention (C) sont fabriquées selon les étapes suivantes (seule l'étape g) de traitement thermique diffère) :
a)Une première co-précipitation du sulfate d'aluminium Al₂(SO₄)₃ et de l'aluminate de sodium NaAlOO à 30°C et pH=9,1 en 8 min : le taux d'avancement est de 10%. Le taux d'avancement correspond à la proportion d'alumine formée lors de la première étape, soit une concentration finale en alumine à 45 g/l. Si on travaille dans un réacteur de 5 l et qu'on vise 4 l de suspension d'alumine de concentration finale en Al2O3 de 45 g/l, avec un taux d'avancement ciblé de 10% pour la première étape de précipitation, 10% de l'alumine totale doit être apportée lors de l'étape a) de précipitation. Le pH de précipitation de la première étape est fixé à 9,1 et le pH de précipitation de la deuxième étape à 9,1. La quantité d'eau initialement présente dans le réacteur est 1330 ml. Pour la première étape a) de précipitation opérant à 30°C et pendant 8 minutes, le débit de sulfate d'aluminium doit être de 7,6 ml/min, le débit d'aluminate de sodium est de 9,1 ml/min et le débit d'eau de 24,6 ml/min. Le ratio massique d'aluminate de sodium sur sulfate d'aluminium est donc de 1,91.
b) Une montée en température de 30 à 70°C en 20 à 30 min ;
c) Une deuxième co-précipitation du sulfate d'aluminium Al₂(SO₄)₃ et de l'aluminate de sodium NaAlOO à 70°C et pH=9,1 en 30 min, avec un taux d'avancement de 90% ; pour la deuxième étape de précipitation opérant à 70°C pendant 30 minutes, le débit de sulfate d"aluminium doit être de 18,5 ml/min, le débit d'aluminate de sodium est de 29 ml/min et le débit d'eau de 33,8 ml/min. Le ratio massique d'aluminate de sodium sur sulfate d'aluminium est donc de 1,84.
d) Filtration par déplacement sur un outil type Buchner fritté P4 et lavage 3 fois avec 5L d'eau distillée à 70°C;
e) Séchage une nuit à 120°C
f) Mise en forme du matériau cru :
   Le gel d'alumine séché est introduit dans un malaxeur de type Brabender. De l'eau acidifiée avec de l'acide nitrique à un taux d'acide total de 3 %, exprimé en poids par rapport à la masse de gel séché introduit dans le malaxeur, est ajoutée en 10 minutes, pendant un malaxage à 20 tours/min. Le malaxage acide est poursuivi pendant 5 minutes. Une étape de neutralisation est ensuite réalisée par ajout d'une solution ammoniacale dans le malaxeur, à un taux de neutralisation de 200%, exprimé en poids d'ammoniaque par rapport à la quantité d'acide nitrique introduit dans le malaxeur pour l'étape d'acidification. Le malaxage est poursuivi pendant 3 minutes.
   La pâte obtenue est ensuite extrudée à travers une filière de 2 mm trilobée.
g) Traitement thermique : Les extrudés obtenus sont séchés à 100°C pendant une nuit, puis calcinés 2h à 800°C sous flux d'air humide en four tubulaire (VVH=1 l/h/g, sans eau pour l'alumine B, avec 30%v/v d'eau pour l'alumine C).

**Tableau 1 : caractéristiques texturales des alumines obtenues**

| | | A | B | C |
|---|---|---|---|---|
| Taux d'avancement de la première étape de précipitation | | 8% | 10% | 10% |
| Traitement thermique des extrudés | | 800°C, 30% d'eau v/v | 800°C, Pas d'eau | 800°C, 30% d'eau v/v |
| Mésoporosité | Vm éso (mL/g) | 0,85 | 0,77 | 0,78 |
| | Dₚ (nm) | 21,3 | 16 | 22,5 |
| Microporosité | Smicroporeuse (m²/g) | 0 | 0 | 0 |
| Macroporosité | Vm acro (mL/g) | 0,03 | 0,01 | 0,01 |
| Surface BET | (m²/g) | 145 | 183 | 140 |
| Répartition | Vd< 10nm (mL/g) | 0,01 | 0,01 | 0,01 |
| poreuse | V d 10-20nm (mL/g) | 0,38 | 0,50 | 0,34 |
| | V d 20-50 nm (mL/g) | 0,42 | 0,30 | 0,46 |
| | V d 50-7000nm (mL/g) | 0,03 | 0,01 | 0,01 |
| | V d> 7000nm (mL/g) | 0,06 | 0,05 | 0,05 |

La sélection d'un taux d'avancement compris entre 5 et 13%, de préférence entre 7 et 11% pour la première étape de précipitation permet d'obtenir une alumine ayant un volume mésoporeux élevé (supérieur à 0,75 ml/g), une haute surface spécifique (surface BET supérieure à 75 m²/g), une absence de micropores : les pores de diamètre inférieur à 10 nm constituant moins de 1% du volume poreux total, une distribution mésoporeuse préférentielle sur les pores de taille comprise entre 10 et 50 nm, avec une majeure partie des pores comprise dans les pores de diamètre compris entre 20 et 50 nm (36%) et un diamètre médian mésoporeux élevé (16, 21,3 et 22,5 nm).

### Exemple 2 (Comparatif) :

On réalise la synthèse de deux gels d'alumine en suivant le même protocole que celui décrit à l'exemple 1, mais en faisant varier le taux d'avancement de la première étape de précipitation, de manière non conforme à l'invention : 0, 20 et 35%.

On ne fait donc varier que la quantité d'alumine apportée lors de la première étape de précipitation. Les étapes d), e), et f) sont identiques à celles décrites à l'exemple 1.

Dans le cas où le taux d'avancement de la première étape de précipitation est 0%, aucun précurseur contenant de l'aluminium n'est apporté dans la première étape.

La précipitation se déroule dans un réacteur de 5 l, à une température de 70°C et un pH de 10,2.

Les concentrations des précurseurs d'aluminium utilisées sont les suivantes : Al₂(SO₄)= à 102g/L en Al₂O₃ et NaAlOO à 155g/L en Al₂O₃. L'ajout des réactifs (sel d'aluminium basique [AlOONa] et acide [Al₂(SO₄)₃]) se fait en continu pendant 30 min avec régulation du pH à 9,0. La totalité des précurseurs est mise en contact à une température de 70°C. La concentration finale en alumine visée est de 45 g/L. La quantité d'eau présente initialement dans le réacteur est de 2000mL. Le débit de sulfate d'aluminium doit être de 20,6 ml/min, le débit d'aluminate de sodium est de 25 ml/min et le débit d'eau est de 21 mL/min. Le ratio massique d'aluminate de sodium sur sulfate d'aluminium est donc de 1,84.

La suspension obtenue est ensuite filtrée par déplacement d'eau sur un outil type Buchner fritté et le gel d'alumine obtenu est lavé 3 fois avec 5 l d'eau distillée.

Aucune pâte cohésive n'est obtenue. Aucun extrudé n'a donc pu être mis en forme.

Dans le cas où le taux d'avancement de la première étape de précipitation est 20 %, l'alumine est donc préparée de la manière suivante.

Si on travaille dans un réacteur de 5 l et que l'on vise 4 l de suspension d'alumine de concentration finale en Al₂O₃ de 45 g/l, avec un taux d'avancement ciblé de 20% pour la première étape de précipitation, 20% de l'alumine totale doit être apportée lors de l'étape a) de précipitation Le pH de précipitation de la première étape est fixé à 9,5 et le pH de précipitation de la deuxième étape à 9,0. La quantité d'eau présente initialement dans le réacteur est de 1330 ml.

Pour la première étape a) de précipitation opérant à 30°C et pendant 8 minutes, le débit de sulfate d'aluminium doit être de 15,2 ml/min, le débit d'aluminate de sodium est de 19 ml/min et le débit d'eau est de 49,2 mL/min. Le ratio massique d'aluminate de sodium sur sulfate d'aluminium est donc de 1,91.

Pour la deuxième étape de précipitation, opérant à 70°C, pendant 30 minutes, le débit de sulfate d'aluminium doit être de 16,5 ml/min, le débit d'aluminate de sodium est de 20 ml/min et le débit d'eau est de 30,1 mL/min. Le ratio massique d'aluminate de sodium sur sulfate d'aluminium est donc de 1,84.

Mise en forme du matériau cru :
Le gel d'alumine séché est introduit dans un malaxeur de type Brabender. De l'eau acidifiée avec de l'acide nitrique à un taux d'acide total de 3 %, exprimé en poids par rapport à la masse de gel séché introduit dans le malaxeur, est ajoutée en 10 minutes , pendant un malaxage à 20 tours/min. Le malaxage acide est poursuivi pendant 5 minutes. Une étape de neutralisation est ensuite réalisée par ajout d'une solution ammoniacale dans le malaxeur, à un taux de neutralisation de 200%, exprimé en poids d'ammoniaque par rapport à la quantité d'acide nitrique introduit dans le malaxeur pour l'étape d'acidification. Le malaxage est poursuivi pendant 3 minutes.

La pâte obtenue est ensuite extrudée à travers une filière de 2 mm trilobée.
g) Traitement thermique : Les extrudés obtenus sont séchés à 100°C pendant une nuit, puis calcinés 2h à 800°C sous flux d'air humide en four tubulaire (VVH=1 l/h/g avec 30%v/v d'eau).

La distribution poreuse de l'alumine obtenue est caractérisée par intrusion au porosimètre à mercure selon la norme ASTM D4284-83 à une pression maximale de 4000 bar, utilisant une tension de surface de 484 dyne/cm et un angle de contact de 140°.

L'absence de microporosité est vérifiée par porosimétrie azote.

Dans le cas où le taux d'avancement de la première étape de précipitation est 35 %, l'alumine est préparée de la manière suivante :
Si on travaille dans un réacteur de 5 l et que l'on vise 4 l de suspension d'alumine de concentration finale en Al₂O₃ de 45 g/l, avec un taux d'avancement ciblé de 35% pour la première étape de précipitation, 35% de l'alumine totale doit être apportée lors de l'étape a) de précipitation Le pH de précipitation de la première étape est fixé à 9,5 et la deuxième à 9,0. La quantité d'eau ajoutée dans le réacteur est de 1330 ml.

Pour la première étape a) de précipitation opérant à 30°C et pendant 8 minutes, le débit de sulfate d'aluminium doit être de 22,7 ml/min, le débit d'aluminate de sodium est de 28,5 ml/min et le débit d'eau est de 32,2 mL/min. Le ratio massique d'aluminate de sodium sur sulfate d'aluminium est donc de 1,91.

Pour la deuxième étape de précipitation, opérant à 70°C, pendant 30 minutes, le débit de sulfate d'aluminium doit être de 14,4 ml/min, le débit d'aluminate de sodium est de 17,5 ml/min et le débit d'eau est de 34,7 mL/min. Le ratio massique d'aluminate de sodium sur sulfate d'aluminium est donc de 1,84.

Mise en forme du matériau cru :
Le gel d'alumine séché est introduit dans un malaxeur de type Brabender. De l'eau acidifiée avec de l'acide nitrique à un taux d'acide total de 3 %, exprimé en poids par rapport à la masse de gel séché introduit dans le malaxeur, est ajoutée en 10 minutes , pendant un malaxage à 20 tours/min. Le malaxage acide est poursuivi pendant 5 minutes. Une étape de neutralisation est ensuite réalisée par ajout d'une solution ammoniacale dans le malaxeur, à un taux de neutralisation de 200%, exprimé en poids d'ammoniaque par rapport à la quantité d'acide nitrique introduit dans le malaxeur pour l'étape d'acidification. Le malaxage est poursuivi pendant 3 minutes.

La pâte obtenue est ensuite extrudée à travers une filière de 2 mm trilobée.

Traitement thermique : Les extrudés obtenus sont séchés à 100°C pendant une nuit, puis calcinés 2h à 800°C sous flux d'air humide en four tubulaire (VVH=1 l/h/g avec 30%v/v d'eau).

La distribution poreuse de l'alumine obtenue est caractérisée par intrusion au porosimètre à mercure selon la norme ASTM D4284-83 à une pression maximale de 4000 bar, utilisant une tension de surface de 484 dyne/cm et un angle de contact de 140°.

L'absence de microporosité est vérifiée par porosimétrie azote.

**Tableau 2 : caractéristiques texturales des alumines de l'exemple 2**

| | | D | E | F |
|---|---|---|---|---|
| Taux d'avancement première étape de précipitation | | 0% | 20% | 35% |
| Traitement thermique extrudés | | - | 800°C, 30% d'eau v/v | 800°C, 30% d'eau v/v |
| Mésoporosité | Vméso (mL/g) | - | 0,73 | 0,62 |
| | Dₚ (nm) | - | 14,3 | 13,7 |
| Microporosité | Smicroporeuse (m²/g) | - | 1 | 0 |
| Macroporosité | V_{macro} (mL/g) | - | 0,01 | 0,01 |
| Surface BET | (m²/g) | - | 204 | 178 |
| Répartition | Vd<10nm (mL/g) | - | 0,15 | 0,17 |
| poreuse | V d 10-20nm (mL/g) | - | 0,45 | 0,43 |
| | V d 20-50 nm (mL/g) | - | 0,20 | 0,18 |
| | V d 50-7000nm (mL/g) | - | 0,01 | 0,01 |
| | V d>7000nm (mL/g) | - | 0,05 | 0,05 |

Cet exemple montre qu'il n'est pas possible d'obtenir une alumine ayant les propriétés poreuses visées en une seule étape de précipitation (taux d'avancement première étape = 0, alumine D).

Il est en revanche possible d'obtenir une alumine ayant un volume mésoporeux élevé, une haute surface spécifique, et un volume limité de macropores avec un procédé en deux étapes de précipitation. Cependant, les alumines E et F obtenues présentent une proportion élevée de pores de taille inférieure à 10 nm, et des diamètres médians mésoporeux respectifs de 14,3 et 13,7 nm, donc non conformes. Les alumines E et F obtenues avec un taux d'avancement de la première étape non conforme ne présentent par conséquent pas une distribution mésoporeuse monomodale préférentielle sur les pores de taille comprise entre 10 et 50 nm, avec un diamètre médian mésoporeux élevé, supérieur ou égal à 16 nm.

## Revendications

1. Procédé de préparation d'une alumine mésoporeuse amorphe, ledit procédé comprenant au moins les étapes suivantes :
a) une première étape de précipitation, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique et l'acide nitrique, dans lequel au moins un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la première étape compris entre 5 et 13%, le taux d'avancement étant défini comme étant la proportion d'alumine formée en équivalent Al₂O₃ lors de ladite première étape de précipitation par rapport à la quantité totale d'alumine formée à l'issue de l'étape c) du procédé de préparation, ladite étape opérant à une température comprise entre 20 et 90 degrés et pendant une durée comprise entre 2 minutes et 30 minutes;
b) une étape de chauffage de la suspension à une température comprise entre 40 et 90°C pendant une durée comprise entre 7 minutes et 45 minutes,
c) une deuxième étape de précipitation de la suspension obtenue à l'issue de l'étape de chauffage b) par ajout dans la suspension d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique et l'acide nitrique, dans lequel au moins un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la deuxième étape compris entre 87 et 95 %, le taux d'avancement étant défini comme étant la proportion d'alumine formée en équivalent Al₂O₃ lors de ladite deuxième étape de précipitation par rapport à la quantité totale d'alumine formée à l'issue de l'étape c) du procédé de préparation, ladite étape opérant à une température comprise entre 40 et 90 °C et pendant une durée comprise entre 2 minutes et 50 minutes ;
d) une étape de filtration de la suspension obtenue à l'issue de l'étape c) de deuxième précipitation pour obtenir un gel d'alumine ;
e) une étape de séchage dudit gel d'alumine obtenu à l'étape d) pour obtenir une poudre,
f) une étape de mise en forme de la poudre obtenue à l'issue de l'étape e) pour obtenir un matériau cru,
g) une étape de traitement thermique du matériau cru obtenu à l'issue de l'étape f) à une température comprise entre 500 et 1000°C, en présence ou non d'un flux d'air contenant jusqu'à 60% en volume d'eau.

2. Procédé selon la revendication 1 dans lequel le taux d'avancement de la première étape de précipitation a) est compris entre 6 et 12%.

3. Procédé selon l'une des revendications 1 ou 2 dans lequel le taux d'avancement de la première étape de précipitation a) est compris entre 7 et 11%.

4. Procédé selon l'une des revendications 1 à 3 dans lequel le précurseur basique est l'aluminate de sodium.

5. Procédé selon l'une des revendications 1 à 4 dans lequel le précurseur acide est le sulfate d'aluminium.

6. Procédé selon l'une des revendications 1 à 5 dans lequel dans la première étape de précipitation le milieu réactionnel aqueux est de l'eau et ladite étape opère sous agitation, en l'absence d'additif organique.

7. Alumine mésoporeuse amorphe présentant un diamètre médian mésoporeux en volume déterminé par intrusion au porosimètre à mercure supérieur ou égal à 16 nm, un volume mésoporeux tel que mesuré par intrusion au porosimètre à mercure, compris entre 0,70 et 0,90 ml/g, et un volume poreux total mesuré par porosimétrie au mercure supérieur à 0,75 ml/g, et dans laquelle le volume des macropores est inférieur à 10 % du volume poreux total.

8. Alumine mésoporeuse amorphe selon la revendication 7 dans laquelle le volume des macropores est inférieur à 5 % du volume poreux total.

9. Alumine mésoporeuse amorphe selon l'une des revendications 7 à 8 qui ne présente pas de micropores.

10. Alumine mésoporeuse amorphe selon l'une des revendications 7 à 9 présentant un diamètre médian mésoporeux en volume déterminé par intrusion au porosimètre à mercure supérieur à 18 nm.

11. Alumine mésoporeuse amorphe selon la revendication 10 présentant un diamètre médian mésoporeux en volume déterminé par intrusion au porosimètre à mercure supérieur à 20 nm.

## Patentansprüche

1. Verfahren zur Herstellung eines amorphen mesoporösen Aluminiumoxids, wobei das Verfahren mindestens die folgenden Schritte umfasst:
a) einen ersten Schritt der Ausfällung in einem wässrigen Reaktionsmedium mindestens einer basischen Vorstufe, ausgewählt unter Natriumaluminat, Kaliumaluminat, Ammoniak, Natriumhydroxid und Kaliumhydroxid, und mindestens einer sauren Vorstufe, ausgewählt unter Aluminiumsulfat, Aluminiumchlorid, Aluminiumnitrat, Schwefelsäure, Salzsäure und Salpetersäure, bei dem mindestens eine der basischen oder sauren Vorstufen Aluminium umfasst, die relative Menge der sauren und basischen Vorstufen gewählt ist, um einen pH-Wert des Reaktionsmediums zwischen 8,5 und 10,5 zu erhalten, und die Menge der sauren oder basischen Vorstufe(n), die Aluminium enthalten, derart eingestellt ist, dass eine Fortschrittsrate des ersten Schritts zwischen 5 und 13 % erzielt wird, wobei die Fortschrittsrate als das Verhältnis von Aluminiumoxid, das als Äquivalent Al₂O₃ im ersten Ausfällungsschritt gebildet wird, zu der Gesamtmenge an Aluminiumoxid, das nach dem Schritt c) des Herstellungsverfahrens gebildet wird, definiert ist, wobei der Schritt bei einer Temperatur zwischen 20 und 90 °C und während einer Dauer zwischen 2 Minuten und 30 Minuten durchgeführt wird;
b) einen Schritt der Erhitzung der Suspension auf eine Temperatur zwischen 40 und 90 °C während einer Dauer zwischen 7 Minuten und 45 Minuten;
c) einen zweiten Ausfällungsschritt der nach dem Erhitzungsschritt b) erhaltenen Suspension durch Hinzufügen zu der Suspension mindestens einer basischen Vorstufe, ausgewählt unter Natriumaluminat, Kaliumaluminat, Ammoniak, Natriumhydroxid und Kaliumhydroxid, und mindestens einer sauren Vorstufe, ausgewählt unter Aluminiumsulfat, Aluminiumchlorid, Aluminiumnitrat, Schwefelsäure, Salzsäure und Salpetersäure, wobei mindestens eine der basischen oder sauren Vorstufen Aluminium umfasst, wobei die relative Menge der sauren und basischen Vorstufen gewählt ist, um einen pH-Wert des Reaktionsmediums zwischen 8,5 und 10,5 zu erhalten, und die Menge der sauren oder basischen Vorstufe(n), die Aluminium enthalten, derart eingestellt ist, dass eine Fortschrittsrate des zweiten Schritts zwischen 87 und 95 % erzielt wird, wobei die Fortschrittsrate als das Verhältnis von Aluminiumoxid, das als Äquivalent Al₂O₃ im zweiten Ausfällungsschritt gebildet wird, zu der Gesamtmenge an Aluminiumoxid, das nach dem Schritt c) des Herstellungsverfahrens gebildet wird, definiert ist, wobei der Schritt bei einer Temperatur zwischen 40 und 90 °C und während einer Dauer zwischen 2 Minuten und 50 Minuten durchgeführt wird;
d) einen Schritt der Filterung der nach dem zweiten Ausfällungsschritt c) erhaltenen Suspension, um ein Aluminiumoxidgel zu erhalten;
e) einen Schritt der Trocknung des in Schritt d) erhaltenen Aluminiumoxids, um ein Pulver zu erhalten;
f) einen Schritt des Formens des nach dem Schritt e) erhaltenen Pulvers, um ein Rohmaterial zu erhalten;
g) einen Schritt der Wärmebehandlung des nach dem Schritt f) erhaltenen Rohmaterials bei einer Temperatur zwischen 500 und 1000 °C im Beisein oder nicht eines Luftstroms, der bis zu 60 Volumen-% Wasser enthält.

2. Verfahren nach Anspruch 1, bei dem die Fortschrittsrate des ersten Ausfällungsschritts a) zwischen 6 und 12 % beträgt.

3. Verfahren nach einem der Ansprüche 1 oder 2, bei dem die Fortschrittsrate des ersten Ausfällungsschritts a) zwischen 7 und 11 % beträgt.

4. Verfahren nach einem der Ansprüche 1 bis 3, bei dem die basische Vorstufe Natriumaluminat ist.

5. Verfahren nach einem der Ansprüche 1 bis 4, bei dem die saure Vorstufe Aluminiumsulfat ist.

6. Verfahren nach einem der Ansprüche 1 bis 5, bei dem bei dem ersten Ausfällungsschritt das wässrige Reaktionsmedium Wasser ist, und der Schritt unter Rühren ohne organischen Zusatz durchgeführt wird.

7. Amorphes mesoporöses Aluminiumoxid, umfassend einen volumengemittelten mesoporösen Durchmesser, bestimmt durch Intrusion am Quecksilber-Porosimeter, größer oder gleich 16 nm, ein mesoporöses Volumen, wie durch Intrusion am Quecksilber-Porosimeter gemessen, zwischen 0,70 und 0,90 ml/g, und ein poröses Gesamtvolumen, gemessen durch Quecksilber-Porosimetrie, größer als 0,75 ml/g, und bei dem das Volumen der Makroporen kleiner als 10 % des porösen Gesamtvolumens ist.

8. Amorphes mesoporöses Aluminiumoxid nach Anspruch 7, bei dem das Volumen der Makroporen kleiner als 5 % des porösen Gesamtvolumens ist.

9. Amorphes mesoporöses Aluminiumoxid nach einem der Anspruche 7 bis 8, das keine Mikroporen aufweist.

10. Amorphes mesoporöses Aluminiumoxid nach einem der Ansprüche 7 bis 9, das einen volumengemittelten mesoporösen Durchmesser, bestimmt durch Intrusion am Quecksilber-Porosimeter, größer als 18 nm aufweist.

11. Amorphes mesoporöses Aluminiumoxid nach Anspruch 10, das einen volumengemittelten mesoporösen Durchmesser, bestimmt durch Intrusion am Quecksilber-Porosimeter, größer als 20 nm aufweist.

## Claims

1. A process for preparing an amorphous mesoporous alumina, said process comprising at least the following steps:
a) a first step for precipitating, in an aqueous reaction medium, at least one basic precursor selected from sodium aluminate, potassium aluminate, ammonia, sodium hydroxide and potassium hydroxide and at least one acidic precursor selected from aluminium sulphate, aluminium chloride, aluminium nitrate, sulphuric acid, hydrochloric acid and nitric acid, in which at least one of the basic or acidic precursors comprises aluminium, the relative flow rate of the acidic and basic precursors being selected so as to obtain a pH of the reaction medium in the range 8.5 to 10.5 and the flow rate of the acidic and basic precursor or precursors containing aluminium being adjusted in order to obtain a state of advance for the first step in the range 5% to 13%, the state of advance being defined as being the proportion of alumina formed, in Al₂O₃ equivalents, during said first precipitation step with respect to the total quantity of alumina formed at the end of step c) of the preparation process, said step being operated at a temperature in the range 20°C to 90°C and for a period in the range 2 minutes to 30 minutes;
b) a step for heating the suspension to a temperature in the range 40°C to 90°C for a period in the range 7 minutes to 45 minutes;
c) a second step for precipitating the suspension obtained at the end of the heating step b) by adding to the suspension at least one basic precursor selected from sodium aluminate, potassium aluminate, ammonia, sodium hydroxide and potassium hydroxide and at least one acidic precursor selected from aluminium sulphate, aluminium chloride, aluminium nitrate, sulphuric acid, hydrochloric acid and nitric acid, in which at least one of the basic or acidic precursors comprises aluminium, the relative flow rate of the acidic and basic precursors being selected so as to obtain a pH of the reaction medium in the range 8.5 to 10.5 and the flow rate of the acidic and basic precursors containing aluminium being adjusted in order to obtain a state of advance for the second step in the range 87% to 95%, the state of advance being defined as the proportion of alumina formed, in Al₂O₃ equivalents, during said second precipitation step with respect to the total quantity of alumina formed at the end of step c) of the preparation process, said step being operated at a temperature in the range 40°C to 90°C and for a period in the range 2 minutes to 50 minutes;
d) a step for filtering the suspension obtained at the end of the second precipitation step c) in order to obtain an alumina gel;
e) a step for drying said alumina gel obtained in step d) in order to obtain a powder;
f) a step for shaping the powder obtained at the end of step e) in order to obtain a green material;
g) a step for heat treating the green material obtained at the end of step f) at a temperature in the range 500°C to 1000°C, in the presence or otherwise of a stream of air containing up to 60% by volume of water.

2. The process according to claim 1, in which the state of advance of the first precipitation step a) is in the range 6% to 12%.

3. The process according to claim 1 or claim 2, in which the state of advance of the first precipitation step a) is in the range 7% to 11%.

4. The process according to one of claims 1 to 3, in which the basic precursor is sodium aluminate.

5. The process according to one of claims 1 to 4, in which the acidic precursor is aluminium sulphate.

6. The process according to one of claims 1 to 5, in which in the first precipitation step, the aqueous reaction medium is water and said step is operated with stirring, in the absence of an organic additive.

7. An amorphous mesoporous alumina with a median mesopore diameter, by volume determined by mercury intrusion porosimetry, of 16 nm or more, a mesopore volume, as measured by mercury intrusion porosimetry, in the range 0.70 mL/g to 0.90 mL/g, and a total pore volume, measured by mercury porosimetry, of more than 0.75 mL/g, and in which the volume of the macropores is less than 10% of the total pore volume.

8. The amorphous mesoporous alumina according to claim 7, in which the volume of the macropores is less than 5% of the total pore volume.

9. The amorphous mesoporous alumina according to one of claims 7 to 8, having no micropores.

10. The amorphous mesoporous alumina according to one of claims 7 to 9, having a median mesopore diameter, by volume determined by mercury intrusion porosimetry, of more than 18 nm.

11. The amorphous mesoporous alumina according to claim 10, having a median mesopore diameter, by volume determined by mercury intrusion porosimetry, of more than 20 nm.
